# EUROPÄISCHE PATENTSCHRIFT

(11) **EP 0 715 607 B1**
(45) Veröffentlichungstag und Bekanntmachung des Hinweises auf die Patenterteilung: **02.09.1998**
(21) Anmeldenummer: 94925406.4
(22) Anmeldetag: 29.07.1994
(51) Int. Cl.: C02F 3/00, C02F 1/28, C02F 3/12

(54) **VORRICHTUNG ZUM REINIGEN VON ABWASSER ODER GRUNDWASSER**
DEVICE FOR PURIFYING WASTE WATER OR GROUND WATER
SYSTEME D'EPURATION D'EAUX USEES OU D'EAUX SOUTERRAINES

(30) Priorität: 26.08.1993 DE 4329243
(43) Veröffentlichungstag der Anmeldung: 12.06.1996
(73) Patentinhaber: SCHERING AKTIENGESELLSCHAFT, 13342 Berlin (DE)
(72) Erfinder: DONNER, Christoph, D-14532 Kleinmachnow (DE); SOKOLOWSKY, Stephan, D-14197 Berlin (DE); REINKE, Lothar, D-10625 Berlin (DE); TILL, Frank, D-13353 Berlin (DE)
(86) Internationale Anmeldenummer: EP9402495
(87) Internationale Veröffentlichungsnummer: WO9506009

(56) Entgegenhaltungen:
- EP-A- 0 349 708
- DE-A- 3 711 416
- DE-A- 3 815 271
- DE-C- 4 237 716
- DATABASE WPI Section Ch, Week 8807, Derwent Publications Ltd., London, GB; Class A12, AN 88-046787 & JP,A,63 004 892 (KURITA WATER IND KK) 9. Januar 1988

## Beschreibung

Die Erfindung betrifft eine Vorrichtung zum Reinigen von Abwasser oder Grundwasser, welches durch biologisch abbaubare und durch Adsorption/Desorption abtrennbare organische Substanzen verunreinigt ist,
wobei die Vorrichtung charakterisiert ist
durch ein Fermentationssystem,
welches dem biologischen Abbau dient,
und
durch ein Adsorbersystem, (Rechtschreibfehler im Anspruch 1, vgl. S.1 letzer Absatz)
das mit einem regenerativen Polymeradsorbens versehen ist, das
(i) mit einer Zuleitung und Ableitung für das Wasser
(ii) α) mit einer Abflußleitung für das Desorbat und β) mit einer Abflußleitung für das Wasser versehen ist,
dadurch gekennzeichnet,
daß das Adsorbersystem (iii) mit einer Dampfzuführung versehen ist,
daß das Wasser der Abflußleitung des Adsorbersystems gereinigt ist,
daß aus dem Adsorbersystem das gereinigte Wasser austritt,
wobei entweder
a) das Fermentationssystem dem Adsorbersystem vorgeschaltet wird und
   das aus dem Adsorbersystem austretende Desorbat über eine Rückführungsleitung an den Eingang des Fermentationssystems zurückgeführt wird,
   oder wobei
b) das Adsorbersystem
   über eine Leitung für das Desorbat dem Fermentationssystem vorgeschaltet ist, dabei wird die mikrobiologische Fermentation lediglich zur Aufbereitung des Desorbats verwendet, und
   über eine Rückführungsleitung die Fermentationtslösung an die Einleitungsstelle des Abwasser oder Grundwassers zurückführt.

Es ist bekannt, daß man mit Hilfe mikrobiologischer Verfahren hohe Abbauraten an biologisch abbaubaren Verbindungen im verunreinigten Grundwasser oder Abwasser erzielen kann, daß aber der Abbau bei diesem Verfahren in der Regel nicht so vollständig ist, daß die vom Gesetzgeber vorgeschriebenen Einleitwerte für Oberflächengewässer nicht erreicht werden. Die Anwendung des adsorptiven Verfahrens führt zu einer Einhaltung der vorgeschriebenen Einleitwerte, erfordert aber eine sehr aufwendige Entsorgung des anfallenden Desorbats.

Es wurde nun gefunden, daß durch die Kombination beider Verfahren deren Vorteile in idealer Weise genutzt werden kann und deren Nachteile aufgehoben werden.

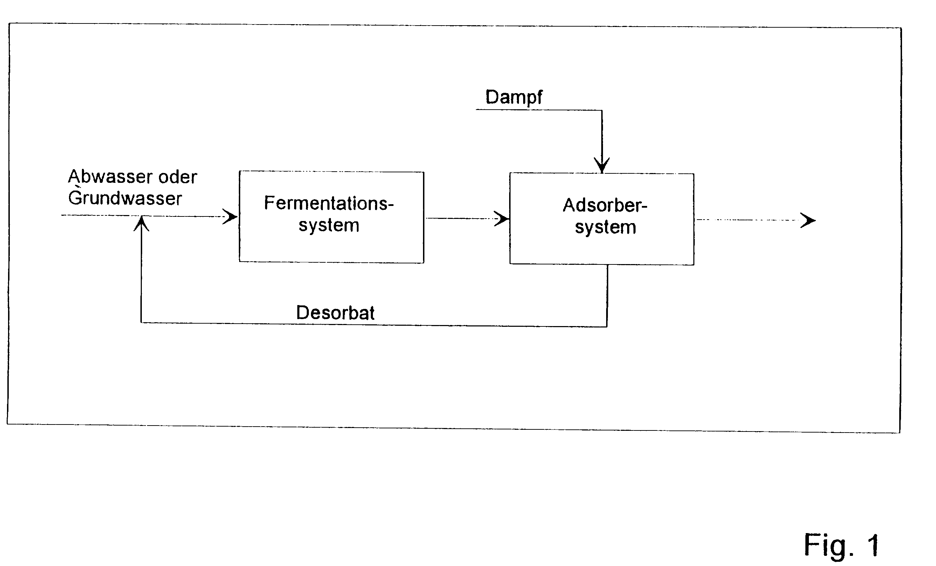

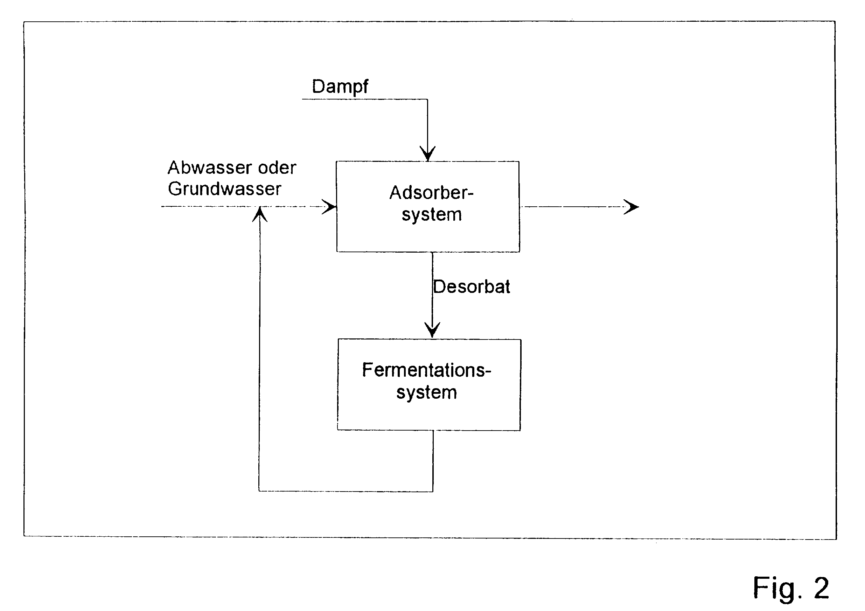

Anhand der schematischen Figuren 1 und 2 seien die Möglichkeiten dieser Kombinationen näher erläutert:

Figur 1 zeigt eine Vorrichtung zur Reinigung von Abwasser oder Grundwasser, welche gekennzeichnet ist durch ein vorgeschaltetes Fermentationssystem, ein nachgeschaltetes Adsorbersystem und eine Rückführungsleitung, die bewirkt, daß das austretende Desorbat an den Eingang des Fermentationssystems zurückgeführt wird.

Das Grundwasser oder Abwasser wird also bei dieser Ausführungsform zuerst dem mikrobiologischen Abbau der Verunreinigungen und dann dem Absorbersystem, welches die im Wasser enthaltenen Reste an organischen Substanzen fast vollständig entfernt, zugeführt. Das anfallende Desorbat wird dann in den Grundwasserstrom der Mikrobiologie zurückgeführt.

Figur 2 zeigt eine Vorrichtung zur Reinigung von Abwasser oder Grundwasser, welche gekennzeichnet ist durch ein vorgeschaltetes Adsorbersystem, ein nachgeschaltetes Fermentationssystem und eine Rückführungsleitung, die bewirkt, daß die austretende Fermentationslösung an die Einleitungsstelle des Abwassers oder Grundwassers zurückgeführt wird. Bei dieser Ausführungsform wird das Grundwasser direkt dem Adsorbersystem zugeleitet und die mikrobiologische Fermentation lediglich zur Aufbereitung des Desorbats verwendet.

In der Praxis wird es in der Regel am günstigsten sein, einen Teil des Abwassers oder Grundwassers in das Fermentationssystem und den Rest in das Adsorbersystem einzuspeisen und hierbei die Reaktionsparameter so einzustellen, daß die Aufbereitung des Abwassers oder Grundwassers möglichst wenig Wasserdampf erfordert.

Für die erfindungsgemäße Vorrichtung eignen sich grundsätzlich alle Fermentationssysteme, die zur Aufbereitung von Abwasser oder Grundwasser dienen können. (B.Atkinson Biochemical Reaktors, Pion Ltd., London 1974), jedoch sind solche Fermentationssysteme vorzuziehen, die eine kontinuierliche Fermentation ermöglichen.

Eine besonders bevorzugte erfindungsgemäße Vorrichtung ist eine solche, deren Fermentationssystem aus ein bis drei Wirbelschichtfermentern, besteht wie sie in WO-A-9 322 246 beschrieben sind.

Diese Wirbelschichtfermenter sind gekennzeichnet durch einen auf der Spitze stehenden kegelförmigen Fermentationsraum (1) mit zwei gegebenenfalls mit Steuerventilen (4 und 5) versehenen Zuführungsleitungen (2 und 3) von denen die eine (2) vertikal ausgerichtet in der Kegelspitze und die zweite (3) nicht vertikal ausgerichtet im Kegelmantel in der 0,02 bis 0,3-fachen Fermentationsraumhöhe angeordnet ist und einen oberhalb des Fermentationsraums (1) befindlichen Sedimentationsraum (6), welcher ein oder zwei gegebenenfalls mit Steuerventilen (9 und 10) versehene Abflußleitungen (7 und 8) besitzt.

Die besondere Formgebung dieses Wirbelschichtfermenters bewirkt, daß in deren Fermentationsraum (1) eine turbulente Strömung herrscht, wenn man die zu fermentierende Flüssigkeit gleichzeitig über die vertikale und horizontale Zuführungsleitung (2 und 3) einspeist. Diese Strömung geht dann im Sedimentationsraum (6) in eine quasi laminare Strömung über. Werden derartig kontinuierlich beschickte Fermenter mit einer Mikroorganismen-Kultur beimpft so bildet diese nach einer Anwachsphase infolge der turbulenten Strömung pelletartige Agglomerate aus, die im Fluidatbett des Fermentationsraums (1) schweben und im Sedimentationsraum (6) wieder absinken. Infolge dieser Gegebenheiten eignen sich diese Wirbelschichtfermenter wesentlich besser zur kontinuierlichen Fermentation großer Flüssigkeitsmengen über einen langen Zeitraum hin als dies bei vorbekannten Wirbelschichtfermentern, wie beispielsweise der in der Europäischen Patentschrift EP-B-0258611 beschriebenen Vorrichtung, der Fall ist. Demzufolge sind diese Wirbelschichtfermenter beispielsweise zur biologischen Abwasseroder Grundwasseraufbereitung besonders geeignet.

Die Formgebung dieser Wirbelschichtfermenter ist im wesentlichen durch die Art der Mikroorganismen-Kulturen bestimmt, die in ihnen verwendet werden sollen. Sind dies Mikroorganismen-Kulturen, die relativ rasch sedimentieren, wie zum Beispiel Mikroorganismen-Immobilisate, wie sie in der internationalen Patentanmeldung WO 88/08825 bechrieben sind oder Pilzkulturen, so wird man vorzugsweise Wirbelschichtfermenter mit einem Fermentationsraum (1) und Sedimentationsraum (6) von relativ geringer Höhe verwenden. Bei relativ schlecht sedimentierenden Mikroorganismen-Kulturen, wie dies in der Regel Bakterienkulturen sind, wird man vorzugsweise Wirbelschichtfermenter mit relativ hohem Fermentationsraum (1) und Sedimentationsraum (6) bevorzugen. Es ist aber nicht erforderlich, daß für jede verwendete Mikroorganismen-Kultur ein speziell ausgestalteter Fermenter angewendet wird; durch eine entsprechende Regulierung der Zuflußgeschwindigkeiten der zu fermentierenden Flüssigkeiten durch die vertikale und nicht vertikale Zuführungsleitung (2 und 3) läßt sich in der Regel auch bei für den speziellen Fall nicht optimal ausgestalteten erfindungsgemäßen Wirbelschichtfermentern eine kontinuierliche Fermentation realisieren.

In der Regel werden diese Wirbelschichtfermenter so ausgestaltet sein, daß der obere Durchmesser des Fermentationsraumes (1) 0,1 bis 0,8 mal so groß ist wie dessen Höhe. Bei diesen Zahlenwerten ist nicht berücksichtigt, daß der Fementationsraum in aller Regel eine abgestumpfte Kegelspitze besitzt, was schon aus dem Grunde zweckmäßig ist, damit die Fermenter leichter gereinigt werden können.

Es wurde bereits erwähnt, daß die nicht vertikal ausgerichtete Zuführungsleitung (3) im Kegelmantel in der 0,02 bis 0,3 - insbesondere 0.05 bis 0,15-fachen - Fermentationsraumhöhe angeordnet ist,. wobei beide Zuführungsleitungen so ausgerichtet sind, daß bei der Inbetriebnahme der Fermenter im Fermentationsraum ein Wirbelschichtbett erzeugt wird. Die nicht vertikal ausgerichtete Zuführungsleitung (3) kann horizonal so angeordnet werden,daß die von der Eintrittsöffnung dieser Zuleitung zur Fermentationsraumesachse weisende horizontale Gerade diese Achse kreuzt. Zur Erzeugung einer gut reproduzierbaren turbulenten Strömung ist es aber zweckmäßig, daß die Längstachse der nicht vertikal ausgerichteten Zuleitung und die von der Eintrittsöffnung dieser Zuleitung zur Fermentationsrumachse weisenden horizontalen Geraden in der Vertikalen und/oder Horizonalen einen Winkel bilden, der in der Vertikalen den Wert 70° und in der Horizontalen den Wert 60° nicht übersteigt. Ist diese Zuführungsleitung (3) vertikal nach oben gerichtet angeordnet, so beträgt der Winkel vorzugsweise 10° bis 60 ° (insbesondere 30 ° bis 40 °), wenn die Leitung vertikal, aber nach unten gerichtet angeordnet ist, hat der Winkel zweckmäßigerweise einen Wert zwischen 10 ° und 60 °. (insbesondere 20 ° bis 45 °) Falls die Zuführungsleitung (3) gegebenenfalls zusätzlich horizontal versetzt angeordnet ist, beträgt der Winkel vorzugsweise 5° bis 60° und insbesondere 20° bis 45°

Es ist für den Fachmann offenkundig, daß die Begriffe "horizontal" und "vertikal" nicht im mathematischen Sinne zu verstehen sind, sondern, daß die Zuführungsleitungen innerhalb der üblichen Toleranzen von einer exakten horizontalen oder vertikalen Anordnung abweichen können. In der Regel werden die Zuführungsleitungen (2 und 3) mit den üblichen Steuerventilen (4 und 5) versehen und über eine gemeinsame Leitung mit einem zur Aufnahme der zu fermentierenden Lösung bestimmten Vorratsgefäß verbunden sein.

Es wurde bereits erwähnt, daß diese Wirbelschichtfermenter einen oberhalb des Fermentationsraumes (1) befindlichen Sedimentationsraum (6) haben, der ein oder vorzugsweise zwei gegebenenfalls mit Steuerventilen (9 und 10) versehene Abflußleitungen (7 und 8) besitzt.

Dieser Sedimentationsraum (6) kann so gestaltet sein, daß er eine übergangslose Fortsetzung des kegelförmigen Fermentationsraums darstellt; andererseits kann er beispielsweise auch so ausgestaltet sein, daß er aus ein oder zwei gegebenenfalls mit einer konischen Erweiterung versehenen, zylindrischen Bauteilen besteht. In diesem Falle kann er so dimensioniert sein, daß sein oberer Druchmesser das 1 bis 3-fache (insbesondere das 1,5 bis 2,5 Fache) des oberen Durchmessers des Fermentationsraumes (1) beträgt. Der Sedimentationsraum (6) ist vorzugsweise so dimensioniert, daß er die 0,2 bis 0,5-fache Höhe des Fermentationsraumes (1) besitzt. Der Sedimentationsraum (6) besitzt ein oder vorzugsweise zwei gegebenenfalls mit Steuerventilen (9 und 10) versehene Abflußleitungen. Zwei Abflußleitungen sind dann zweckmäßig, wenn beabsichtigt ist, einen Teil der fermentierten Flüssigkeit in den Fermentationskreislauf zurück zu führen um die zu fermentierende Flüssigkeit soweit zu verdünnen, daß eine praktisch vollständige Umwandlung der darin enthaltenen Substrate erreicht werden kann. In diesem Falle ist die der Rückführung dienende Abflußleitung zweckmäßigerweise etwas tiefer angeordnet (vorzugsweise 20 bis 40 % unterhalb der oberen Abflußleitung), als die dem Abfluß dienende Leitung.

Ebenso wie konventionelle Fermenter können auch diese Wirbelschichtfermenter mit den üblichen Hilfsmitteln versehen werden, die eine Temperierung, pH-Wert-Steuerung, Belüftung und/oder Sterilisation des Fermenterinhaltes ermöglichen. Er kann wie auch konventionelle Fermenter aus Glas und/oder korrosionsfestem Metall gefertigt sein.

Anhand von Zeichnungen sollen diese Wirbelschichtfermenter näher erläutert werden.

Es zeigen:
Figur 3 einen Längsschnitt durch einen erfindungsgemäßen Wirbelschichtfermenter.
Figur 4 einen Querschnitt durch den Wirbelschichtfermenter der Firgur 3 in Höhe der Ebene A-B.
Figur 5 einen Längsschnitt durch einen Wirbelschichtfermenter mit eingebauter Temperier-, Belüftungs- und Sterilisiervorrichtung.
Figur 6 eine schematische Darstellung einer Fermentationsanlage mit einem erfindungsgemäßen Wirbelschichtfermenter und
Figur 7 eine schematische Darstellung einer Fermentationsanlage mit zwei in Reihe geschalteten Wirbelschichtfermentern.

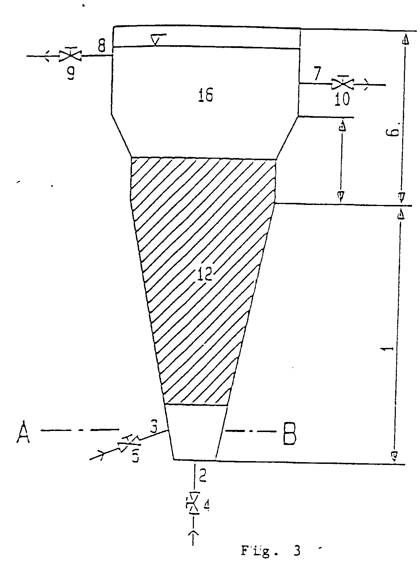

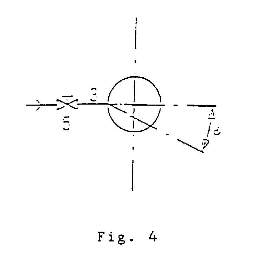

Der in Figur 3 dargestellte Wirbelschichtfermenter ist zur Abwasseraufbereitung mit Bakterien-Kulturen bestimmt. Er besteht aus dem kegelförmigen Fermentationsraum (1) mit abgestumpfter Kegelspitze dem Sedimentationsraum (6) sowie den mit Steuerventilen (4 und 5) versehenen Zuführungsleitungen (2 und 3) und den mit Steuerventilen (9 und 10) versehenen Abflußleitungen (7 und 8). Der Fermentationsraum (1) hat eine Höhe von 2300 mm und einen oberen Durchmesser von 600 mm. In ihm führt die vertikale Zuleitung (2) und in einer Höhe von 230 mm die nicht horizontale Zuleitung (3), die vertikal nach oben geneigt ist und mit der und mit der Horizontalen einen Winkel von 35° bildet. Am oberen Rand des Fermentationsraumes (1) ist der Sedimentationsraum (6) angeordnet. Dieser besteht aus zwei, mit einer konischen Erweiterung versehenen, zylindrischen Bauteilen, ist oben verschlossen und hat einen oberen Durchmesser von 1300 mm und eine Gesamthöhe von 1300 mm.(Die schraffierte Fläche 12 der Figur 1 soll den Bereich symbolisieren, in welchem die Bakterienkultur verwirbelt wird. Der mit der Ziffer 16 gekennzeichnete Raum soll den weitgehend bakterienfreien Raum symbolisieren). Unterhalb der oberen Abdeckung sind einander gegenüberstehend zwei Abflußleitungen (7 und 8) angebracht, von denen dieeine, dem Ablauf der Fermentationsbrühe dienende Leitung (8) 250 mm und die der Rückführung dienende Leitung (9) 600 mm unterhalb der oberen Abdeckung des Sedimentationsraums angeordnet ist. Der Fermenter ist aus rostfreiem Stahl angefertigt. Aus Fig 4 ist erkennbar, daß die nicht vertikale Zuführungsleitung (3) mit der von ihrer Eintrittsöffnung zur Fermentationsachse weisenden Geraden einen Winkel a von 35 ° bildet.

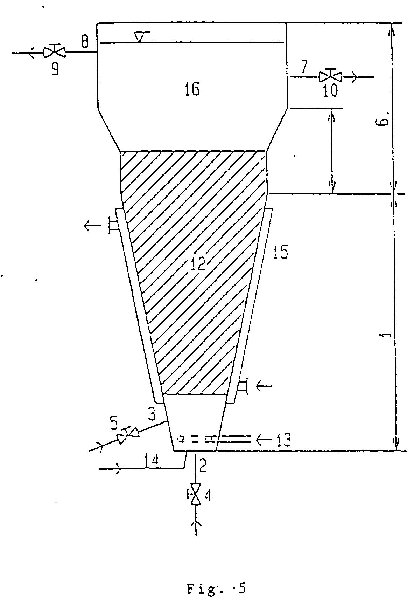

Der in Figur 5 dargestellte Wirbelschichtfermenter hat den gleichen Aufbau wie der in Figur 1 beschriebene, er hat aber zusätzlich noch eine dicht über dem Boden befindliche ringförmige mit Düsen versehene Zuluftleitung (13), eine Heißdampfleitung (14), die dazu dienen kann, den Fermenterinhalt zu sterilisieren und einen den Fermentationsraum umhüllenden Doppelmantel (15), zur Aufnahme der Temperierflüssigkeit.

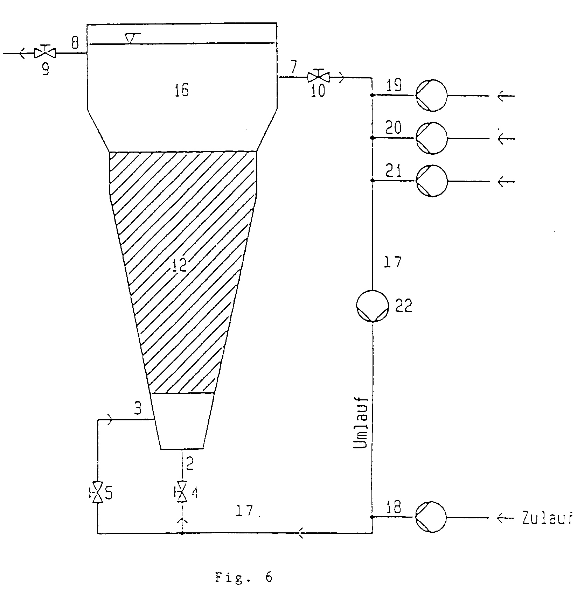

Die in Figur 6 schematisch dargestellte Fermentationsanlage besteht im Wesentlichen aus einem Wirbelschichtfermenter, wie in Figur 1 erläutert und einer mit einer Dosierpumpe (22) sowie einer Zuleitung zur Einspeisung von zur p_{H}-Wert steuernder Hilfsmittel (19), einer Zuleitung zur Einspeisung von H₂O₂ als Sauerstoffdonator (20), einer Zuleitung zur Einspeisung von Nährmedium (21) und einer Zuleitung zur Einspeisung von Abwasser (18), versehenen Rückführungsleitung (17), welche über eine Verzweigung mit den Zuführungsleitungen (2 und 3) verbunden ist.

Über die Zuleitung (18) werden stündlich 1 m³ Abwasser und der mit Nährmedium angereicherte auf p_{H} = 7 eingestellte Rücklauf in den mit einer aus dem entsprechenden Abwasserschlamm isolierten Bakterien-Mischkultur beimpften Fermenter eingespeist, wobei die Steuerventile (4 und 5) der Zuführungsleitungen (2 und 3) so eingestellt werden, daß im Fermenter nach Abschluß der Anwachsphase (ca.2 bis 6 Wochen) ein stabiles Fluidatbett mit konstanter Mikroorganismen-Dichte entsteht. Dann werden dem Fermenter über die eine Abflußleitung (7) stündlich 1 m³ gereinigtes Abwasser entnommen während über die andere Abflußleitung (8) pro Stunde 7 bis 14 m³ gereinigtes Abwasser in den Kreislauf zurückgeführt werden um das eingespeiste Abwasser oder Grundwasser zu verdünnen.

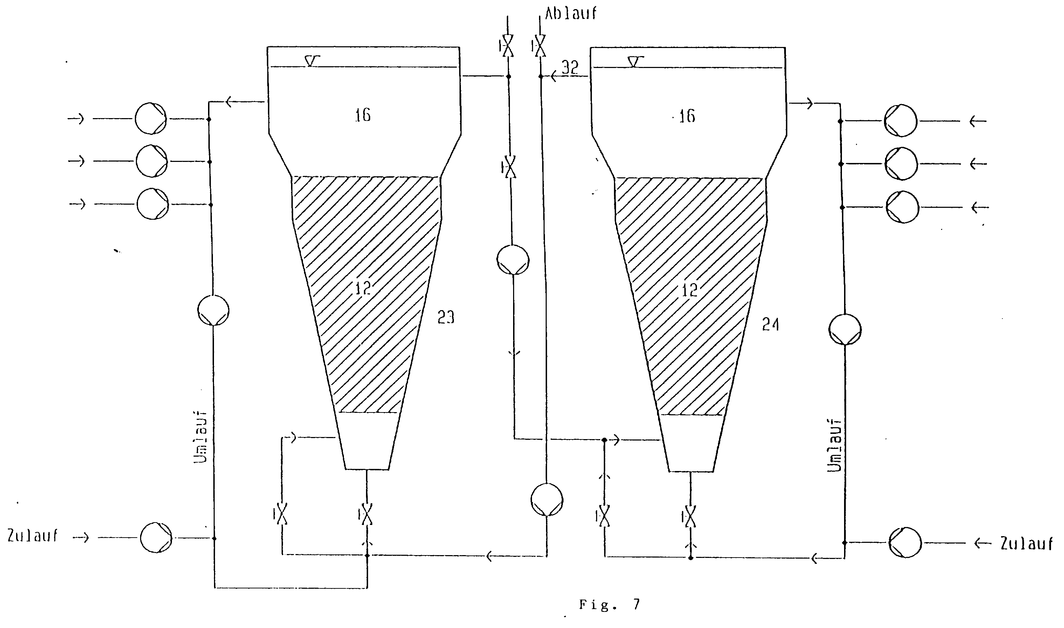

Letztlich sei die in Figur 7 schematisch dargestellte Fermentationsanlage erwähnt, die sich im Wesentlichen von der in Figur 6 skizzierten Vorrichtung dadurch unterscheidet, daß sie zwei Fermentationseinheiten (23 und 24) besitzt, die prinzipiell den gleichen Aufbau besitzen,wie der in Fig 7 dargestellte Einheit, wobei die von der Einheit 24 abführende Abflüßleitung 32 zur Einspeisung des Abwassers oder Grundwassers in die Fermentationseinheit 23 dient. Diese Anlage kann durch entsprechende Einstellung der Steuerventile soeingestellt werden, daß die Fermenter paralell oder in Reihe geschaltet sind.

Die erfindungsgemäße Vorrichtung kann als Adsorbersystem eine übliche Adsorberkolonne besitzen, welche mit einer Zuführungs- und Abflußleitung für das Wasser, einer Dampfzuführungleitung und einer Desorberabflußleitung versehen ist. Jede dieser Leitungen hat ein Steuerventil, welches es ermöglicht, die Kolonne von Adsorption auf Desorption umzuschalten. Die Kolonne ist mit einem regenerativen Polymeradsorbans, wie zum Beispiel Wofatit Y 77 (jetzt EP63), Y 59 oder EP61 der Firma Chemie AG, Bitterfeld oder XAD2 oder XAD4 der Firma Roehm und Haas in üblicher Weise beschickt und wird zur Adsorption und Desorption in der Weise verwendet, die dem Fachmann wohl bekannt ist (Ullmann's Encyclopedia of Industrial Chemistry 5th Ed. Vol. B3, VCH Verlagsgesellschaft DE Weinheim, Kapitel 9, Chem.-Ing.-Techn. MS 1202/84 ref. in Chem.-Ing. Techn. 56, 1984, 242f und Chem. Techn. 43 1991, 51f).

Ein derartiges aus einer einzigen Adsorberkolonne bestehendes Adsorptionssystem hat aber den Nachteil, daß es nicht kontinuierlich arbeiten kann. Deshalb ist es günstiger, in der erfindungsgemäßen Vorrichtung ein Adsorptionssystem zu verwenden, welches aus 2 bis 12 Adsorberkolonnen bestehen, die so miteinander verbunden sind, daß ein Teil von ihnen zur Adsorption der Verunreinigungen im Wasser dient, während eine oder gegebenenfalls auch mehrere Kolonnen mittels Wasserdampf desorbiert werden.

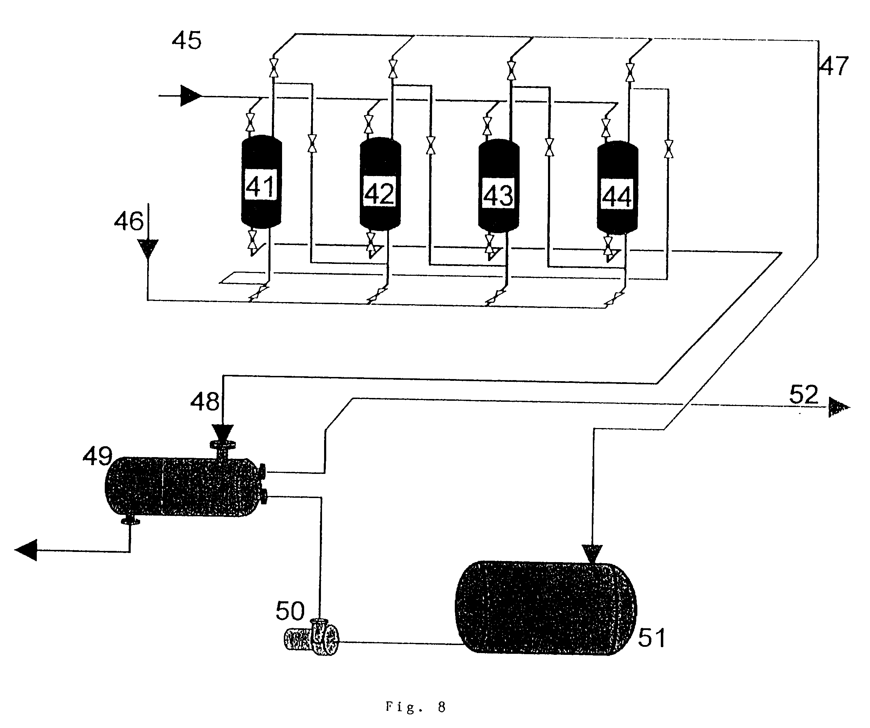

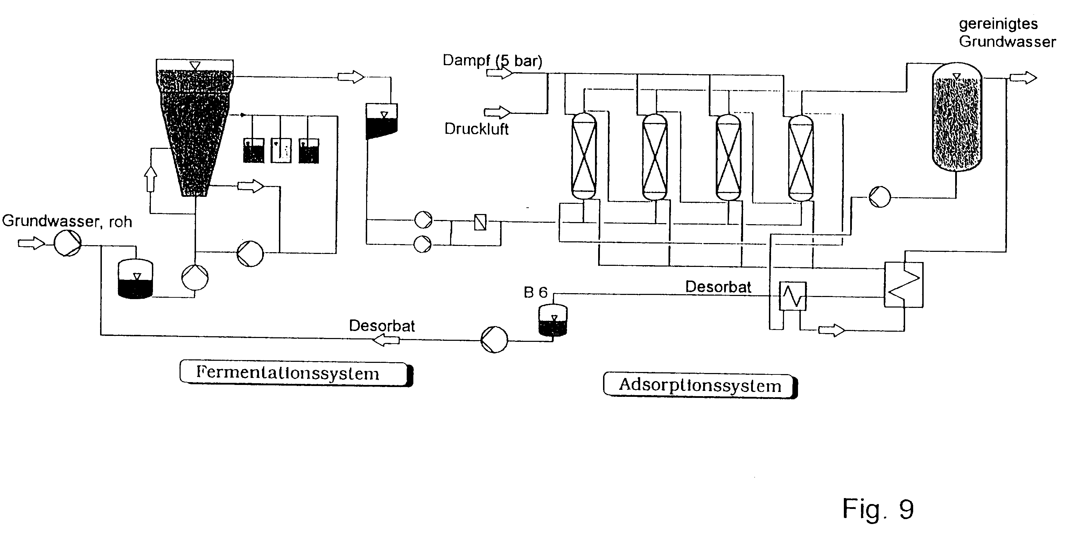

In Figur 8 ist ein derartiges Adsorptionssystem näher erläutert:
Dieses System besteht aus vier Adsorberkolonnen 41 bis 44. Es zeigt einen Zustand des Systems, in dem über die geöffneten Steuerventile vom Einleitungsrohr 46 Abwasser oder Grundwasser in die Kolonnen 44, 41 und 42 in Reihenschaltung eingeleitet wird und das gereinigte Wasser über die Abflußleitung 47 abgeleitet, im Speicher 51 gesammelt, über eine Pumpe 50 in die als Kühlmittel in den Kondensator 49 und schließlich über die Leitung 52 in das Grundwasser eingeleitet wird. Gleichzeitig wird über das entsprechende Steuerventil aus der Dampfleitung 45 Dampf in die Kolonne 43 eingeleitet und das Desorbat über die Abflußleitung 48 abgeführt, in dem Kondensator 49 vollständig kondensiert und über die Leitung 52 in das Fermentationssystem zurückgeleitet. Figur 9 zeigt eine schematische Darstellung einer erfindungsgemäßen Vorrichtung zum Reinigen von Abwasser oder Grundwasser, die im Wesentlichen aus einem Fermentationssystem gemäß Figur 6 und einem Adsorbersystem gemäß Figur 8 besteht.

## Patentansprüche

1. Vorrichtung zum Reinigen von Abwasser oder Grundwasser,
welches durch biologisch abbaubare und durch Adsoption / Desorption abtrennbare organische Substanzen verunreinigt ist,
wobei die Vorrichtung charakterisiert ist
durch ein Fermentationssystem,
welches dem biologischen Abbau dient,
und
durch ein Adsorbersystem,
das mit einem regenerativen Polymeradsorbens versehen ist, das
(i) mit einer Zuleitung und Ableitung für das Wasser
(ii)
α) mit einer Abflußleitung für das Desorbat und
β) mit einer Abflußleitung für das Wasser versehen ist,
dadurch gekennzeichnet,
daß das Adsorbersystem (iii) mit einer Dampfzuführung versehen ist,
daß das Wasser der Abflußleitung des Adsorbersystems gereinigt ist,
daß aus dem Adsorbersystem das gereinigte Wasser austritt,
wobei entweder
a) das Fermentationssystem dem Adsorbersystem vorgeschaltet wird und
das aus dem Adsorbersystem austretende Desorbat über eine Rückführungsleitung an den Eingang des Fermentationssystems zurückgeführt wird,
oder wobei
b) das Adsorbersystem
über eine Leitung für das Desorbat dem Fermentationssystem vorgeschaltet ist,
dabei wird die mikrobiologische Fermentation lediglich zur Aufbereitung des Desorbats verwendet, und
über eine Rückführungsleitung die Fermentationtslösung an die Einleitungsstelle des Abwasser oder Grundwassers zurückführt.

2. Vorrichtung zur Reinigung von Abwasser oder Grundwasser gemäß Patentanspruch 1, dadurch gekennzeichnet, daß das Fermentationssystem aus ein bis drei Wirbelschichtfermentern besteht.

3. Vorrichtung zur Reinigung von Abwasser oder Grundwasser gemäß Anspruch 1 und 2, dadurch gekennzeichnet, daß das Adsorbersystem aus 1 bis 12 jeweils mit einem regenerativen Polymeradsorbens beschickten Adsorbersäule besteht.

4. Vorrichtung zum Reinigen von Abwasser oder Grundwasser gemäß einem der Ansprüche 1 bis 3, dadurch gekennzeichnet, daß das gereinigte Wasser zur Kondensation des Desorbats verwendet wird.

5. Vorrichtung nach einem der vorherigen Ansprüche 2 bis 4 mit Rückbezug auf 2, wobei der Wirbelschichtfermenter charakterisiert ist durch einen auf der Spitze stehenden kegelförmigen Fermentationsraum mit zwei gegebenenfalls mit Steuerventilen versehenen Zuführungsleitungen, von denen die eine vertikal ausgerichtet in der Kegelspitze und die zweite, nicht vertikal ausgerichtet im Kegelmantel in der 0,02 bis 0,3 - fachen Fermentationsraumhöhe angeordnet ist und einen oberhalb des Fermentationtsraums befindlichen Sedimentationsraum, welcher ein oder zwei gegebenenfalls mit Steuerventilen versehene Abflußleitungen besitzt.

## Claims

1. Apparatus for purifying waste water or groundwater that is contaminated by organic substances that are biologically decomposable and can be separated off by adsorption/desorption,
the apparatus being characterised by
a fermentation system that serves the biological decomposition, and
an adsorber system that is provided with a regenerative polymer adsorbent and with
(i) a feed and a discharge for the water,
(ii)
α) a discharge pipe for the desorbate, and
β) a discharge pipe for the water,
characterised in that
the adsorber system is provided (iii) with a steam supply,
the water of the discharge pipe of the adsorber system is purified,
the purified water emerges from the adsorber system,
in which apparatus either
a) the fermentation system is connected upstream of the adsorber system and the desorbate that emerges from the adsorber system is returned to the inlet of the fermentation system by way of a return pipe,
or
b) the adsorber system is connected upstream of the fermentation system by way of a pipe for the desorbate,
the microbiological fermentation being used solely for working up the desorbate, and the fermentation solution being returned to the entry point of the waste water or groundwater by way of a return pipe.

2. Apparatus for purifying waste water or groundwater according to patent claim 1, characterised in that the fermentation system consists of from one to three fluidised bed fermenters.

3. Apparatus for purifying waste water or groundwater according to claims 1 and 2, characterised in that the adsorber system consists of from 1 to 12 adsorber columns each charged with a regenerative polymer adsorbent.

4. Apparatus for purifying waste water or groundwater according to any one of claims 1 to 3, characterised in that the purified water is used to condense the desorbate.

5. Apparatus according to any one of the preceding claims 2 to 4 with appendancy to claim 2, in which the fluidised bed fermenter is characterised by a conical fermentation area, standing on its tip, having two supply pipes that are optionally provided with control valves, one of which supply pipes is arranged, aligned vertically, in the tip of the cone and the second of which is arranged, aligned non-vertically, in the conical wall at a height of from 0.02 to 0.3 times the height of the fermentation area, and by a sedimentation area that is arranged above the fermentation area, which sedimentation area has one or two discharge pipes that are optionally provided with control valves.

## Revendications

1. Dispositif de purification des eaux usées ou des eaux souterraines souillées par des substances organiques biodégradables et que l'on peut éliminer par adsorption/désorption,
dispositif caractérisé en ce qu'il présente
un système de fermentation servant à la dégradation biologique,
et
un système adsorbeur
comportant un adsorbant polymère régénérable,
lequel est muni
(i) d'une conduite d'alimentation et d'une conduite d'évacuation pour l'eau
(ii)
α) d'une conduite d'écoulement du désorbat et
β) d'une conduite d'écoulement d'eau,
caractérisé en ce que
le système d'adsorbeur (iii) est muni d'une alimentation en vapeur,
l'eau s'écoulant par la conduite de vidange du système d'absorbeur est purifiée,
l'eau sortant du système d'absorbeur est purifiée, soit
a) le système de fermentation est installé avant
et
le désorbat sortant du système d'adsorbeur est recyclé à l'entrée du système de fermentation par une conduite de refoulement,
soit
b) le système d'adsorbeur est installé avant le système de fermentation au moyen d'une conduite pour le désorbat,
ce faisant, on n'applique la fermentation microbiologique qu'aux traitement du désorbat, et on recycle la solution de fermentation à l'entrée des eaux usées ou des eaux souterraines au moyen d'une conduite de refoulement.

2. Dispositif pour la purification des eaux usées ou des eaux souterraines selon la revendication 1, caractérisé en ce que le système de fermentation est constitué de 1 à 3 fermenteurs à lit fluidisé.

3. Dispositif pour la purification des eaux usées ou des eaux souterraines selon la revendication 1 et 2, caractérisé en ce que le système d'adsorbeur est constitué de 1 à 12 colonnes d'adsorption garnies d'adsorbant polymère que l'on peut régénérer à chaque fois.

4. Dispositif pour la purification des eaux usées ou des eaux souterraines selon la revendication 1 à 3, caractérisé en ce que l'on utilise de l'eau purifiée pour la condensation du désorbat.

5. Dispositif pour la purification des eaux usées ou des eaux souterraines selon l'une des revendication précédentes 2 à 4, avec rattachement de la revendication 2, le fermenteur à lit fluidisé étant caractérisé par une chambre de fermentation conique reposant sur le sommet avec deux conduites d'alimentation éventuellement munies de vannes de réglage, dont l'une est disposée verticalement au sommet du cône et l'autre est disposée non verticalement dans la chemise du cône à une hauteur de 0,02 à 0,3 fois la hauteur de la chambre de fermentation et ledit dispositif présente une chambre de sédimentation disposée au-dessus de la chambre de fermentation, laquelle chambre de sédimentation est munie d'une ou deux conduites d'évacuation, éventuellement pourvues de vannes de régulation.
